# EUROPEAN PATENT APPLICATION

(11) **EP 4 531 474 A1**
(43) Date of publication of application: **02.04.2025**
(21) Application number: 22943001.2
(22) Date of filing: 23.05.2022
(51) Int. Cl.: H04W 72/04

(54) **WIRELESS COMMUNICATION METHODS, TERMINAL DEVICES, AND NETWORK DEVICES**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); XU, Weijie, Dongguan, Guangdong 523860 (CN); CUI, Shengjiang, Dongguan, Guangdong 523860 (CN)
(74) Representative: RGTH
(86) International application number: PCT/CN2022/094432
(87) International publication number: WO 2023/225788

(57) **Abstract**

Embodiments of the present application provide a method of wireless communication, a terminal device and a network device. Different terminal devices correspond to different trigger signals, so that the different terminal devices can use resources indicated by resource indication information in the different trigger signals, thus realizing orderly and differentiated transmission of data of a large number of different zero power consumption terminals in a cell, and ensuring reliable transmission of data. The method of wireless communication includes: receiving, by a terminal device, a trigger signal; where the trigger signal carries identification information and resource indication information, the identification information is used for indicating whether the trigger signal is a signal directed at the terminal device, the resource indication information is used for indicating information of a resource occupied by data associated with the trigger signal, and the terminal device obtains power through power harvesting for communication, information collection and processing.

## Description

### TECHNICAL FIELD

Embodiments of the present application relate to the field of communication, and more particularly, to a method of wireless communication, a terminal device and a network device.

### BACKGROUND

In a process of applying a zero power consumption technology to a cellular network, there may be a large number of different zero power consumption terminals in a cell, then how to realize orderly and differentiated transmission of data of the large number of different zero power consumption terminals in the cell is a problem that needs to be solved.

### SUMMARY

Embodiments of the present application provide a method of wireless communication, a terminal device and a network device. Different terminal devices correspond to different trigger signals, so that the different terminal devices can use resources indicated by resource indication information in the different trigger signals, thus realizing orderly and differentiated transmission of data of a large number of different zero power consumption terminals in a cell, and ensuring reliable transmission of data.

In a first aspect, a method of wireless communication is provided, and the method includes:
receiving, by a terminal device, a trigger signal;
where the trigger signal carries identification information and resource indication information, the identification information is used for indicating whether the trigger signal is a signal directed at the terminal device, the resource indication information is used for indicating information of a resource occupied by data associated with the trigger signal, and the terminal device obtains power through power harvesting for communication, information collection and processing.

In a second aspect, a method of wireless communication is provided, and the method includes:
transmitting, by a network device, a trigger signal;
where the trigger signal carries identification information and resource indication information, the identification information is used for indicating whether the trigger signal is a signal directed at a terminal device, the resource indication information is used for indicating information of a resource occupied by data associated with the trigger signal, and the terminal device obtains power through power harvesting for communication, information collection and processing.

In a third aspect, a terminal device is provided to perform the method in the above first aspect.

Specifically, the terminal device includes a functional module to perform the method in the above first aspect.

In a fourth aspect, a network device is provided to perform the method in the above second aspect.

Specifically, the network device includes a functional module to perform the method in the above second aspect.

In a fifth aspect, a terminal device is provided, including a processor and a memory. The memory is configured to store a computer program, and the processer is configured to call and run the computer program stored in the memory, to cause the terminal device to perform the method in the above first aspect.

In a sixth aspect, a network device is provided, including a processor and a memory. The memory is configured to store a computer program, and the processer is configured to call and run the computer program stored in the memory, to cause the network device to perform the method in the above second aspect.

In a seventh aspect, an apparatus is provided to implement the method in any one of the above first to second aspects.

Specifically, the apparatus includes a processor, and the processer is configured to call and run a computer program from a memory, to cause a device equipped with the apparatus to perform the method in any one of the above first to second aspects.

In an eighth aspect, a computer readable storage medium is provided, which is configured to store a computer program, and the computer program causes a computer to perform the method in any one of the above first to second aspects.

In a ninth aspect, a computer program product is provided, including a computer program instructions. The computer program instructions cause a computer to perform the method in any one of the above first to second aspects.

In a tenth aspect, a computer program is provided. The computer program, when running on a computer, causes the computer to perform the method the method in any one of the above first to second aspects.

According to above technical solutions, the trigger signal received by the terminal device carries the identification information and the resource indication information, the identification information is used for indicating whether the trigger signal is the signal directed at the terminal device, the resource indication information is used for indicating the information of the resource occupied by the data associated with the trigger signal. That is, different terminal devices correspond to different trigger signals, so that the different terminal devices can use resources indicated by resource indication information in the different trigger signals, thus realizing orderly and differentiated transmission of data of the large number of different zero power consumption terminals in the cell, and ensuring the reliable transmission of data.

### BRIEF DESCRIPTION OF THE DRAWINGS

FIG. 1 is a schematic diagram of a communication system architecture applied by embodiments of the present application.
FIG. 2 is a schematic diagram of an example zero power consumption communication system provided by the present application.
FIG. 3 a schematic diagram of power harvesting provided by the present application.
FIG. 4 is a schematic diagram of back scattering communication provided by the present application.
FIG. 5 is a schematic circuit diagram of resistance load modulation provided by the present application.
FIG. 6 is a schematic diagram of symmetrical frequency shifted reflection being generated in a transmitting frequency domain provided by the present application.
FIG. 7 is a schematic diagram of a type of power supply signal and back scattering signal provided by embodiments of the present application.
FIG. 8 is schematic diagram of another type of power supply signal and back scattering signal provided by embodiments of the present application.
FIG. 9 is a schematic exchange flowchart of a method of wireless communication provided according to embodiments of the present application.
FIG. 10 is a schematic diagram of a type of time-frequency resources provided according to embodiments of the present application.
FIG. 11 is schematic diagram of another type of time-frequency resources provided according to embodiments of the present application.
FIG. 12 is a schematic diagram of a type of amplitude modulation provided according to embodiments of the present application.
FIG. 13 is a schematic flowchart of a type of downlink data transmission provided according to embodiments of the present application.
FIG. 14 is a schematic flowchart of a type of uplink data transmission provided according to embodiments of the present application.
FIG. 15 is a schematic block diagram of a terminal device provided according to embodiments of the present application.
FIG. 16 is a schematic block diagram of a network device provided according to embodiments of the present application.
FIG. 17 is a schematic block diagram of a communication device provided according to embodiments of the present application.
FIG. 18 is a schematic block diagram of an apparatus provided according to embodiments of the present application.
FIG. 19 is a schematic block diagram of a communication system provided according to embodiments of the present application.

### DETAILED DESCRIPTION

Technical solutions of the embodiments of the present application will be described below in conjunction with the accompanying drawings in the embodiments of the present application. It is apparent that the described embodiments are merely some but not all of embodiments of the present application. With respect to the embodiments of the present application, all other embodiments obtained by those skilled in the art without creative effort fall within the protection scope of the present application.

The technical solutions of the embodiments of the present application may be applied to various communication systems, such as, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), wireless local area networks (WLAN), internet of things (IoT), wireless fidelity (WiFi), a fifth-generation communication (5th-Generation, 5G) system, or other communication systems.

Generally speaking, traditional communication systems support a limited number of connections which are easy to be implemented. However, with development of the communication technology, mobile communication systems will support not only the traditional communication, but also, for example, device to device (D2D) communication, machine to machine (M2M) communication, machine type communication (MTC), vehicle to vehicle (V2V) communication, sidelink (SL) communication, vehicle to everything (V2X) communication or the like. The embodiments of the present application may also be applied to these communication systems.

In some embodiments, a communication system in the embodiments of the present application may be applied to a carrier aggregation (CA) scenario, may also be applied to a dual connectivity (DC) scenario, and may also be applied to a standalone (SA) network deployment scenario, or applied to a non-standalone (NSA) network deployment scenario.

In some embodiments, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

In some embodiments, the communication system in the embodiments of the present application may be applied to a frequency band of FR1 (corresponding to a frequency band range of 410 MHz to 7.125 GHz), may also be applied to a frequency band of FR2 (corresponding to a frequency band range of 24.25 GHz to 52.6 GHz), and may also be applied to new frequency bands, such as, high frequency bands corresponding to a frequency band range of 52.6 GHz to 71 GHz or a frequency band range of 71 GHz to 114.25 GHz.

In the embodiments of the present application, each embodiments will be described in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, ST) device in the WLAN, which may be a cellular phone, a cordless phone, a session initiation protocol (SIP) phone, a wireless local loop (WLL) station, or a personal digital assistant (PDA) device, a handheld device with wireless communication functions, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present application, the terminal device may be deployed on land, which includes indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, an in-vehicle communication device, a wireless communication chip/application specific integrated circuit (ASIC)/a system on chip (SoC), or the like.

As an example but not a limitation, in the embodiments of the present application, the terminal device may also be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the application, the network device may be a device used for communicating with a mobile device. The network device may be an access point (AP) in the WLAN, a base station (Base Transceiver Station, BTS) in the GSM or CDMA, may also be a base station (NodeB, NB) in the WCDMA, or may also be an evolutional base station (Evolutional Node B, eNB or eNodeB) in the LTE, a relay station or an access point, a network device or base station (gNB) in an in-vehicle device, a wearable device, a network device in an NR network, a network device in the future evolved PLMN network, a network device in the NTN network, or the like.

As an example but not a limitation, in the embodiments of the present application, the network device may have a mobile characteristic, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. In some embodiments, the network device may also be a base station provided on land, water, and other places.

In the embodiments of the present application, the network device may provide services for a cell, and the terminal device communicates with the network device through transmission resources (such as frequency domain resources, or frequency spectrum resources) used by the cell. The cell may be a cell corresponding to the network device (such as the base station). The cell may belong to a macro base station or a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

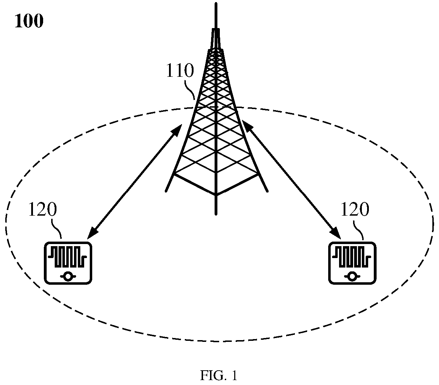

Exemplarily, a communication system 100 applied by the embodiments of the present application is illustrated in FIG. 1. The communication system 100 may include a network device 110, and the network device 110 may be a device used to communicate with a terminal device 120 (or referred to as a communication terminal or terminal). The network device 110 may provide communication coverage for a specific geographic area and communicate with terminal devices located within the coverage area.

FIG. 1 exemplarily illustrates one network device and two terminal devices. In some embodiments, the communication system 100 may include multiple network devices, and coverage range of each network device may be provided therein with other numbers of terminal devices, which is not limited in the embodiments of the present application.

In some embodiments, the communication system 100 may further include other network entities such as a network controller, a mobile management entity, which are not limited in the embodiments of the present application.

It should be understood that a device in a network/system having a communication function in the embodiments of the present application may be referred to as a communication device. Taking the communication system 100 illustrated in FIG. 1 as an example, the communication device may include the network device 110 and the terminal device 120 with the communication function, and the network device 110 and the terminal device 120 may be the specific devices as described above, which will not be repeated here. The communication device may further include other devices in the communication system 100, such as a network controller, a mobility management entity, and other network entities, which are not limited in the embodiments of the present application.

It should be understood that, the terms "system" and "network" are often used interchangeably herein. The term "and/or" herein is only an association relationship to describe associated objects, meaning that there may be three relationships between associated objects, for example, "A and/or B" may represent: A exists alone, both A and B exist, and B exists alone. In addition, a character "/" herein generally means that related objects before and after this character are in an "or" relationship.

It should be understood that, the present application herein relates to a first communication device and a second communication device. The first communication device may be a terminal device, for example, a mobile phone, a machine facility, a customer premise equipment (CPE), an industrial device, a vehicle. The second communication device may be a peer communication device of the first communication device, for example, a network device, a mobile phone, an industrial device, a vehicle. In the embodiments of the present application, the first communication device may be a terminal device, and the second communication device may be a network device (i.e., uplink communication or downlink communication).

Terms used in the section of detailed description are used only for explanation of specific embodiments of the present application and are not intended to limit the present application. The terms "first", "second", "third", "fourth" or the like in the specification and claims of the present application and the drawings are used to distinguish different objects and are not used to describe a specified sequence. Furthermore, the terms "include" and "have" and any variations thereof are intended to cover non-exclusive inclusion.

It should be understood that, "indicate" mentioned in the embodiments of the present application may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present application, the term "correspond" may mean that there is a direct correspondence or indirect correspondence between the two, or it may mean that there is an associated relationship between the two, or it may mean a relationship of indicating and being indicated, or configuring and being configured, or the like.

In the embodiments of the present application, "predefined" or "preconfigured" may be achieved by pre-storing corresponding codes, forms or other means used for indicating relevant information in devices (e.g., including a terminal device and network device), and the present application is not limited to the specific implementation thereof. For example, predefined may refer to what is defined in a protocol.

In the embodiments of the present application, the "protocol" may refer to a standard protocol in the field of communication, for example, may be evolution of an existing LTE protocol, NR protocol, Wi-Fi protocol, or protocols related to other communication systems which are related with them, and types of protocol are not limited in the present application.

To facilitate understanding of the technical solutions of the embodiments of the present application, the technical solutions of the present application are described in detail below through specific embodiments. The following related technologies, as optional solutions, may be arbitrarily combined with the technical solutions of the embodiments of the present application, and those combined solutions all belong to the protection scope of the embodiments of the present application. The embodiments of the present application include at least part of following contents.

In recent years, zero power consumption devices have become more widely used. A typical zero power consumption device is a device based on radio frequency identification (RFID), and the RFID is a technology that utilizes radio coupling between receiving and transmitting ends to implement contactless automatic transmission and identification of tag information, and the technology includes inductive coupling at short distances and electromagnetic coupling at long distances. A RFID tag is also referred to as "radio frequency tag" or "electronic tag". The types of electronic tags are categorized according to the difference in power supply methods, and the electronic tags may be categorized into active electronic tags, passive electronic tags and semi-passive electronic tags. An active electronic tag, also referred to as voluntary electronic tag, mean that power for working is provided by a built-in battery of the electronic tag. Different from an activation way of passive radio frequency, the tag may transmit messages at a set frequency band actively. A passive electronic tag, also referred to as inactive electronic tag, do not support the built-in battery. When the passive electronic tag approaches a reader-writer, the tag is within a near-field range formed by radiation of an antenna of the reader-writer, an antenna of the electronic tag generates an induced current through electromagnetic induction, and the induced current drives a chip circuit in the electronic tag. The chip circuit transmits identification information stored in the tag to the reader-writer through the antenna of the electronic tag. The semi-active electronic tag inherit advantages of the passive electronic tag, such as small size, light weight, low price, and long service life. The built-in battery only provides power for a few circuits inside the chip when there is no reader-writer access. Only when the reader-writer accesses, the built-in battery supplies power to the RFID chip to increase reading and writing distances of the tag and improve reliability of communication.

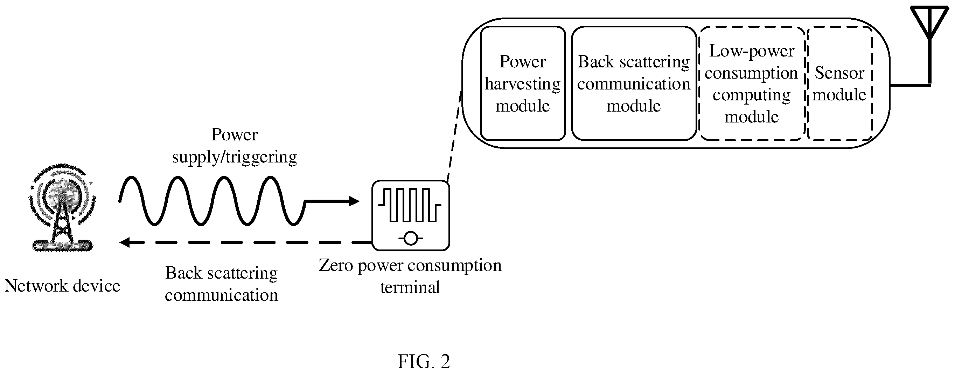

As a wireless communication technology, the most basic RFID system is composed of two parts: an electronic tag (TAG) and a reader-writer (Reader/Writer). For the electronic tag: it is composed of a coupling component and a chip, and each electronic tag has a unique electronic coding, which is placed on a target to be measured to achieve a purpose of marking the target object. For the reader-writer: it may not only read information on the electronic tag, but also write the information on the electronic tag, and also provide power required for communication for the electronic tag. As illustrated in FIG. 2, after entering an electromagnetic field, the electronic tag receives a radio frequency signal transmitted by the reader-writer, the passive electronic tag or inactive electronic tag transmits information stored in the electronic tag by using power obtained by the electromagnetic field generated in space; and the reader-writer reads the information and decodes the information to identify the electronic tag.

The RFID is a type of zero power consumption communication. Key technologies of such type of zero power consumption communication include power harvesting and back scattering communication as well as low power consumption computing. As illustrated in FIG. 2, a typical zero power consumption communication system includes a reader-writer and a zero power consumption terminal. The reader-writer emits radio waves for supplying power to the zero power consumption terminal. A power harvesting module installed in the zero power consumption terminal may harvest power carried by the radio waves in space (radio waves emitted by the reader-writer are illustrated in FIG. 2), to drive a low power consumption computing module of the zero power consumption terminal and realize back scattering communication. After obtaining the power, the zero power consumption terminal may receive a control command from the reader-writer and transmit data to the reader-writer based on a back scattering mode according to a control signaling. The transmitted data may come from data stored by the zero power consumption terminal itself (for example, an identification or pre-written information, such as a production date, a brand, a manufacturer of a product). The zero power consumption terminal may also be load with various sensors, so as to report data harvested by various sensors based on the zero power consumption mechanism.

The zero power consumption communication adopts technologies of power harvesting and back scattering communication. A zero power consumption communication network composed of a network device and a zero power consumption terminal. As illustrated in FIG. 2, the network device is configured to transmit a radio power supply signal and a downlink communication signal to the zero power consumption terminal, and receive a back scattering signal of the zero power consumption terminal. A basic zero power consumption terminal includes an power harvesting module, a back scattering communication module and a low power consumption computing module. In addition, the zero power consumption terminal may also be provided with a memory or sensor for storing some basic information (such as, item identification) or obtaining sensing data, such as, ambient temperature and ambient humidity.

Key technologies in zero power consumption communication are described below.

### Radio Frequency Power Harvesting

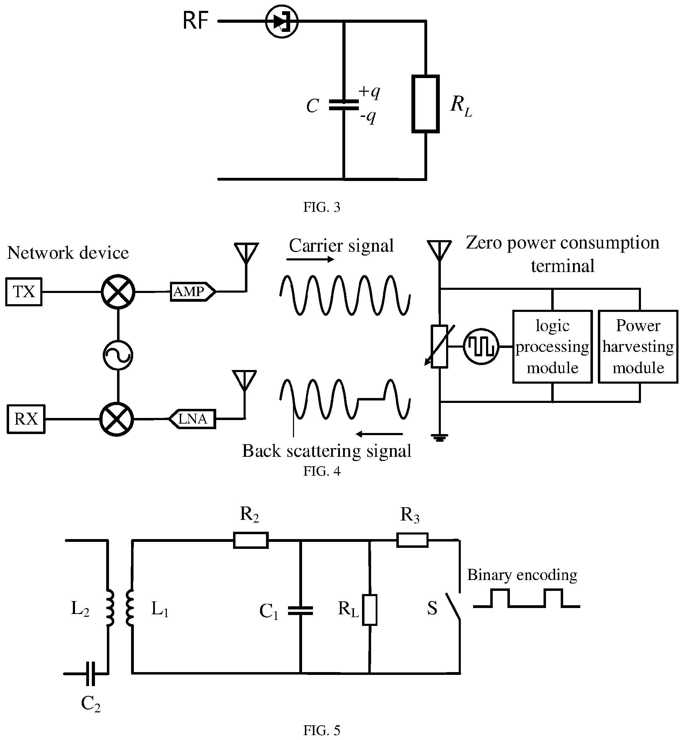

As illustrated in FIG. 3, an RF power harvesting module achieves harvesting electromagnetic wave power in space based on a principle of electromagnetic induction, and then obtains power required for driving a zero power consumption device to work, such as, for driving a low power consumption demodulation and modulation module, a sensor, and memory access. Therefore, the zero power consumption device does not require traditional batteries.

### Back Scattering Communication

As illustrated in FIG. 4, a zero power consumption device receives a carrier signal transmitted by a network device, modulates the carrier signal, loads information to be transmitted and radiates the modulated signal from an antenna. This information transmission process is referred to as back scattering communication. Back scattering and load modulation functions are inseparable. Load modulation adjusts and controls circuit parameters of an oscillation loop of the zero power consumption device according to rhythm of data stream, so that parameters such as impedance of an electronic tag change accordingly, thereby completing the modulation process. A load modulation technology mainly includes two manners: resistive load modulation and capacitive load modulation. In resistive load modulation, a resistor is connected in parallel with a load, and the resistor is switched on or off based on the control of the binary data stream, as illustrated in FIG. 5. On and off of the resistor will cause the circuit voltage to change, thus realizing amplitude shift keying (ASK), that is, modulation and transmission of the signal is achieved by adjusting an amplitude of a back scattering signal of the zero power consumption device. Similarly, in capacitive load modulation, resonant frequencies of a circuit may be changed by switching capacitor on and off, thus realizing frequency shift keying (FSK), that is, the modulation and transmission of the signal is achieved by adjusting an operating frequency of the back scattering signal of the zero power consumption device.

It can be seen that the zero power consumption device performs information modulation on an incoming signal by means of load modulation, thereby realizing the back scattering communication process. Therefore, the zero power consumption device has the following significant advantages.
(1) a terminal does not actively transmit a signal, so the terminal does not need complex radio frequency links, such as a power amplifier (PA) or a radio frequency filter.
(2) the terminal does not need to actively generate a high-frequency signal, and therefore does not need high-frequency crystal oscillator.
(3) with help of back scattering communication, a terminal signal transmission does not need to consume the power of the terminal itself.

### Encoding technology

Data transmitted by an electronic tag may use different forms of codes to represent binary "1" and "0". A radio frequency identification system usually use one of the following encoding manners: reverse non-return-to-zero (NRZ) encoding, Manchester encoding, unipolar return-to-zero encoding, differential bi-phase (DBP) encoding, differential encoding, pulse interval encoding (PIE), bi-phase space (FM0) encoding, Miller encoding, differential encoding, etc. In simple terms, different encoding technologies use different pulse signals to represent 0 and 1.

In some scenarios, the zero power consumption terminal may be divided into a passive zero power consumption terminal, a semi-passive zero power consumption terminal and an active zero power consumption terminal based on power sources and usage manners of the zero power consumption terminal.

### Passive zero power consumption terminal

A passive zero power consumption terminal does not require a built-in battery. When the zero power consumption terminal approaches to a network device (such as, a reader-writer of an RFID system), the zero power consumption terminal is within a near-field range formed by antenna radiation of the network device. Therefore, an antenna of the zero power consumption terminal generates an induced current through electromagnetic induction, and the induced current drives a low power consumption chip circuit of the zero power consumption terminal, which realizes demodulation for a forward link signal and modulation for a backward link signal. For a back scattering link, the zero power consumption terminal transmits signals by means of back scattering.

It can be seen that the passive zero power consumption terminal does not require the built-in battery to drive whether it is in the forward link or a reverse link, and is a true zero power consumption terminal.

Since the passive zero power consumption terminal does not require the battery, and a radio frequency circuit and baseband circuit are very simple, for example, there is no need for devices such as a low noise amplifier (LNA), a power amplifier (PA), a crystal oscillator, an analog-to-digital converter (ADC), the passive zero power consumption terminal has many advantages such as small size, light weight, very cheap price and long service life.

### Semi-passive zero power consumption terminal

A semi-passive zero power consumption terminal itself does not install a conventional battery therein, but may use an RF power harvesting module to harvest radio wave power and store harvested power in a power storage unit (such as a capacitor). After obtaining the power, the power storage unit may drive the low power consumption chip circuit of the zero power consumption terminal, which realizes demodulation for a forward link signal and modulation for a backward link signal. For a back scattering link, the zero power consumption terminal transmits signals by means of back scattering.

It can be seen that the semi-passive zero power consumption terminal does not require a built-in battery to drive whether it is in the forward link or a reverse link. Although power stored in the capacitor is used in the work, the power comes from the radio power harvested by the power harvesting module. Therefore, it is also a true zero power consumption terminal.

The semi-passive zero power consumption terminal inherits many advantages of the passive zero power consumption terminal, and thus it has many advantages such as small size, light weight, very cheap price, long service life.

### Active zero power consumption terminal

The zero power consumption terminal used in some scenarios may also be an active zero power consumption terminal, which may have a built-in battery. The battery is used to drive the low-power consumption chip circuit of the zero power consumption terminal to realize demodulation of the forward link signal and modulation of a backward link signal. However, for a back scattering link, the zero power consumption terminal transmits signals by means of back scattering. Therefore, zero power consumption of this type of terminals is mainly reflected in the fact that the signal transmission of a reverse link does not require power of the terminal itself, but uses the manner of back scattering.

The active zero power consumption terminal supply the power to the RFID chip through the built-in battery, which may increase reading and writing distances of a tag and improve reliability of communication. Therefore, it can be applied in some scenarios with relatively high requirements on communication distance, reading delay, or the like.

### Received signal strength (RSS) positioning

An RSS positioning technology is a type of method that achieves positioning based on a change rule of signal strength with distance of transmission, and its positioning core is to determine a target position according to signal strengths of the same target source received by multiple reference nodes. The RSS positioning technology is widely used in indoor positioning. A traditional RSS positioning technology based on geometric measurement method first needs to measure signal strength RSS of a target received by each monitoring node, and then inversely calculate a distance of transmission d between each node and the target according to a signal transmission attenuation model, and further estimate a relative geographical location of a signal source to be positioned.

### Cellular passive Internet of Things

As applications in 5G industry increase, there are more and more types of connectors and application scenarios, and there will also be higher requirements for price and power consumption of communication terminals. The applications of battery-free and low-cost passive Internet of Things devices have become key technologies of cellular Internet of Things, enriching types and quantities of 5G network link terminals, and truly realizing Internet of Everything. Passive Internet of Things devices may be used in the cellular Internet of Things based on existing zero power consumption devices.

### Subcarrier modulation

Subcarrier modulation means that a signal is modulated on carrier 1 (i.e., subcarrier) firstly, and for some reasons, it is decided to perform modulation again, so this result is used to modulate another carrier 2 with a higher frequency. Subcarrier modulation is a modulation scheme often used in the RFID system.

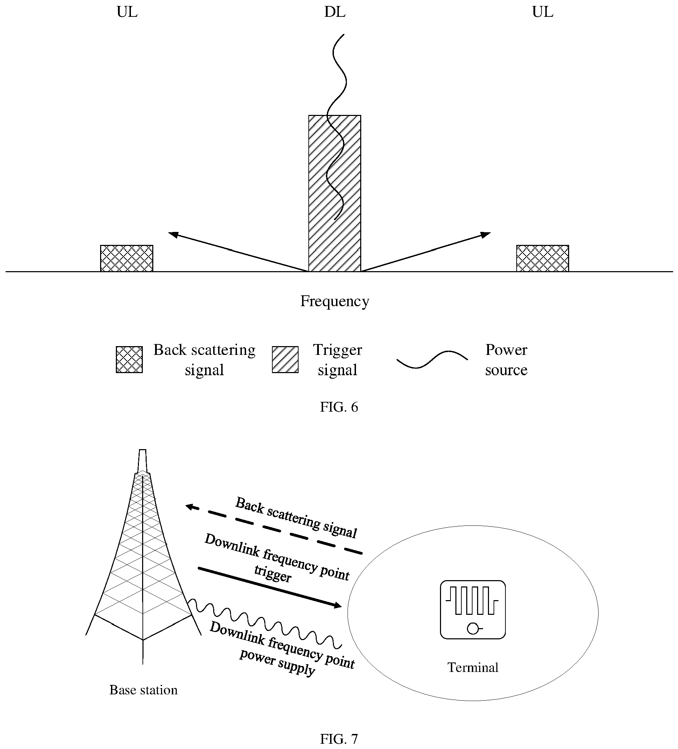

In a cellular network, conventional terminal devices require a battery for supplying power. In a case where a zero power consumption terminal is introduced into the cellular network, it is necessary to provide a power supply signal through a base station or other sources for the zero power consumption device to obtain power. In FIG. 6, a trigger signal and power is provided to the zero power consumption terminal through a downlink (DL) frequency, and feedbacks information is provided to the base station on an uplink (UL) frequency by back scattering. Time and frequency of the back scattering may differ from an incident signal. In FIG. 6, symmetrical frequency shift reflection will be generated in a transmitting frequency domain, and only one frequency point is picked up through a filter and other techniques.

In some embodiments, a signal may also be reflected at a specific time by a reflection processing timing (delay) mechanism, i.e., the time of back scattering may be controlled.

To facilitate understanding of the embodiments of the present application, problems solved by the present application will be described below.

To apply a zero power consumption technology to a cellular network, it is necessary to orderly coordinate multiple terminals to use different time-frequency resources. Taking an NR system as an example, the cellular network may flexibly configure resources with different frequencies. In a duplex mode of frequency division duplex (FDD), a network device transmits a signal on a DL resource, correspondingly, a terminal should transmit a signal on an UL resource. DL and UL are separated by means of frequency. On the UL, there are multiple terminals in the network device to reflect signals, and time-frequency resource indications of the multiple terminals are required. How to make different terminals occupy different resources, such as, different positions in the time domain, frequency domain and even code domain, is a problem that needs to be solved.

Based on the above problems, the present application proposes a solution of zero power consumption back scattering communication, in which different zero power consumption terminals use different resources, the problem that data of a large number of different zero power consumption terminals in a cell is transmitted orderly and differentiated may be solved, thereby ensuring reliable transmission of data.

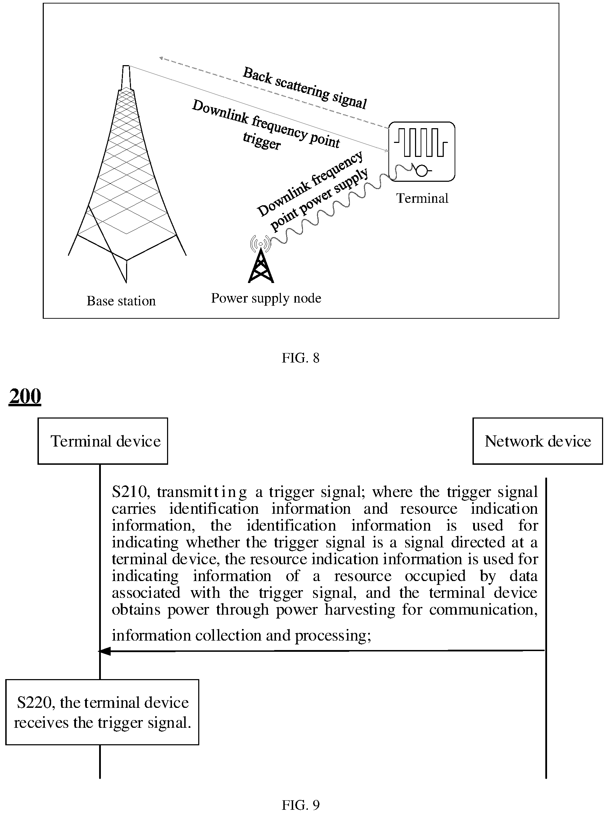

In the embodiments of the present application, a signal for supplying power and a signal for information transmission (a trigger signal) in the cellular network may be two signals or one signal. These two signals may not be transmitted in the same frequency band, or may be transmitted at the same frequency point. A power supply signal that may be continuously or intermittently transmitted in a certain frequency band is a continuous wave (CW), such as, a sine wave. Both the signal for supplying power and the trigger signal may be transmitted by a base station of the cellular network, as illustrated in FIG. 7. Alternatively, the signal for supplying power is transmitted by a specified node, as illustrated in FIG. 8. The zero power consumption terminal performs power harvesting, and after obtaining power, the zero power consumption terminal may perform relevant functions, such as corresponding signal reception, signal reflection and measurement.

The present application mainly achieves multiplexing of multiple terminals by parameters such as time-frequency resources for which a base station schedules a zero power consumption terminal to receive data, reflect data and reflect feedback control information.

The technical solutions of the present application will be described in detail through specific embodiments.

FIG. 9 is a schematic flowchart of a method 200 of wireless communication according to embodiments of the present application. as illustrated in FIG. 9, the method 200 of wireless communication may include at least part of the following contents:
S210, transmitting, by a network device, a trigger signal; where the trigger signal carries identification information and resource indication information, the identification information is used for indicating whether the trigger signal is a signal directed at a terminal device, the resource indication information is used for indicating information of a resource occupied by data associated with the trigger signal, and the terminal device obtains power through power harvesting for communication, information collection and processing; and
S220: receiving, by the terminal device, the trigger signal.

In the embodiments of the present application, the terminal device obtains the power through power harvesting for communication, information collection and processing, that is, before the network device communicates with the terminal device, it is necessary to ensure that the terminal device receives radio waves for radio power supply and obtains radio power through power harvesting. That is, the terminal device may be a zero power consumption terminal, and the embodiments of the present application may be applied to a zero power consumption communication technology. It should be understood that the present application does not limit a specific manner in which the terminal device obtains the power through power harvesting, and as an example but not a limitation, the terminal device may obtain power through radio power supply manners, such as, radio frequency signals, solar energy, pressure or temperature.

In the embodiments of the present application, the trigger signal received by the terminal device carries the identification information and the resource indication information, the identification information is used for indicating whether the trigger signal is a signal directed at the terminal device, and the resource indication information is used for indicating the information of the resource occupied by the data associated with the trigger signal. That is, different terminal devices correspond to different trigger signals, so that the different terminal devices can use resources indicated by the resource indication information in the different trigger signals, thus realizing orderly and differentiated transmission of data of a large number of different zero power consumption terminals in a cell, and ensuring reliable transmission of data. That is, the present application overcomes a problem that data of different zero power consumption terminals cannot be transmitted differentially in an existing zero power consumption communication technology, and solves a problem how to orderly and differentiated transmit the data of the large number of different terminals in the cell. According to the embodiments of the present application, a certain terminal can effectively and simply use resources to perform zero power consumption communication.

In some embodiments, the trigger signal is used for triggering a terminal corresponding to the identification information carried by the trigger signal to transmit and receive data.

In some embodiments, the embodiments of the present application are not limited to data transmission, and may also be used for initial access, paging and other occasions.

In the embodiments of the present application, resource multiplexing of multiple terminals (e.g., zero power consumption terminals) is achieved by information of a resource for which a network device schedules a terminal device (e.g., a zero power consumption terminal) to receive data, and/or by information of a resource for which a network device schedules a terminal device (e.g., a zero power consumption terminal) scheduling of to reflect data, and/or by information of a resource for which a network device schedules a terminal device (e.g., a zero power consumption terminal) to reflect feedback information.

In some embodiments, signals back scattered by different terminals occupy the same or different resources.

In some embodiments, after receiving the trigger signal, the terminal device determines whether the trigger signal is a signal directed at the terminal device based on the identification information carried by the trigger signal. Specifically, in a case where it is determined that the trigger signal is not the signal directed at the terminal device, the terminal device ignores the trigger signal, or the terminal device deletes or abandons the trigger signal; in a case where it is determined that the trigger signal is the signal directed at the terminal device, the terminal device may determine the information of the resource occupied by the data associated with the trigger signal according to the resource indication information carried by the trigger signal, and perform data reception and transmission on a corresponding resource.

In some embodiments, the trigger signal may be transmitted in a manner of broadcast, multicast or multicast.

In the embodiments of the present application, the "back scattering signal" may also be referred to as a "reflecting signal" or "reflected signal", and the present application is not limited thereto.

In some embodiments, the embodiments of the present application may also implement the same functions as the trigger signal through other signals, such as, a data transmission signal, a resource indication signal, a power supply signal, and the present application is not limited thereto.

In some embodiments, the trigger signal is a power supply signal of the terminal device. That is, power supplying and triggering may be integrated to combine into one node to transmit, or combined into one signal.

In some embodiments, the terminal device obtains power through power supply signals continuously transmitted by a network device. Specifically, for example, the continuously transmitted power supply signals are constant amplitude continuous wave signals or power-carrying signals of other waveforms. In some embodiments, power supply signals provided by a third-party device may also be used as the power supply signals of the terminal device.

In some embodiments, the identification information is a terminal inherent identifier. Optionally, the terminal device reports its inherent identifier during a registration process, or the terminal device reports its inherent identifier in advance through other approaches. Specifically, user equipment that receives data and reflects data is distinguished based on the terminal inherent identifier, and interference between multiple users may be greatly avoided.

Specifically, for example, in a case where the identification information carried in the trigger signal is the inherent identifier of the terminal device, the trigger signal is the signal directed at the terminal device. Otherwise, the trigger signal is not the signal directed at the terminal device.

In some embodiments, the terminal inherent identifier may also be referred to as a terminal permanent identifier or a terminal permanent identification.

In some embodiments, the identification information is a terminal identifier registered in a network. That is, the identification information may be a temporary terminal identifier assigned by the network during the registration process. Specifically, user equipment that receives data and reflects data is distinguished based on the identifier registered by the terminal in the network, and interference between multiple users may be greatly avoided.

Specifically, for example, in a case where the identification information carried in the trigger signal is the identifier registered by the terminal device in the network, the trigger signal is the signal directed at the terminal device. Otherwise, the trigger signal is not the signal directed at the terminal device.

In some embodiments, the embodiments of the present application may also be used for data transmission processing in a cellular network, to differentia on terminals for data transmission based on the identification information.

In some embodiments, the data associated with the trigger signal includes at least one of: downlink data, uplink data or sidelink data. That is, the trigger signal may trigger the terminal device to receive the downlink data, the trigger signal may also trigger the terminal device to transmit the downlink data in a back scattering manner, the trigger signal may also trigger the terminal device to transmit the sidelink data in a backscattering manner, or may be combination thereof.

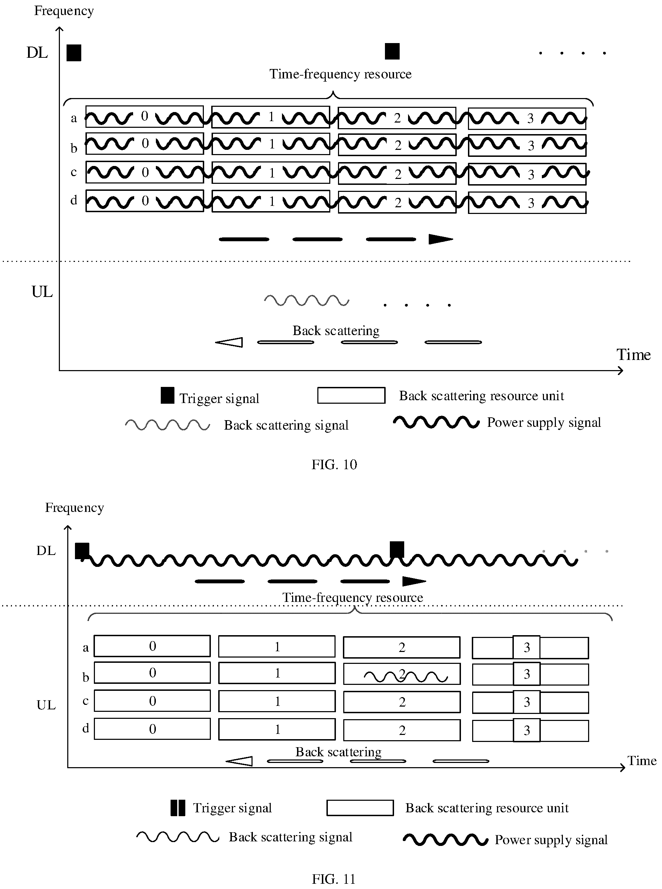

In some embodiments, a resource indicated by the resource indication information includes at least one of: a time domain resource, a frequency domain resource, a code domain resource or a spatial domain resource. Optionally, the frequency domain resource occupies at least one carrier in a frequency domain, or the frequency domain resource occupies at least one subcarrier in the frequency domain. That is, the resource indicated by the resource indication information may occupy at least one carrier or at least one subcarrier in the frequency domain, and each carrier or subcarrier in a time domain may be divided into multiple slices. Specifically, for example, the resource indicated by the resource indication information includes the time domain resource and the frequency domain resource, and in a case where the data associated with the trigger signal is downlink (DL) data, the resource indicated by the resource indication information may be as illustrated in FIG. 10. In a case where the data associated with the trigger signal is uplink (UL) data, the resource indicated by the resource indication information may be as illustrated in FIG. 11.

The embodiments of the present application may multiplex time domain structures of users, and may provide a certain time domain structure for timing control and coordination of uplink and downlink data, thereby ensuring that the terminal and network can process information in a timely manner.

In some embodiments, the resource indication information at least includes an offset value relative to a reference resource position. Specifically, for example, the reference resource position may be configured by the network device, or the reference resource location may be agreed by a protocol. Specifically, the terminal device may determine the information of the resource occupied by the data associated with the trigger signal based on the reference resource position and the offset value relative to the reference resource position. Optionally, the offset value relative to the reference resource position may be a time domain offset value, also may be a frequency domain offset value, also may be a code domain offset value, also may be a spatial domain offset value, or in combination, and the present application is not limited thereto.

In some embodiments, the resource indication information at least includes an offset value on a basis of a resource position occupied by the trigger signal. Specifically, the terminal device may determine the information of the resource occupied by the data associated with the trigger signal based on the resource position occupied by the trigger signal and the offset value on the basis of the resource position occupied by the trigger signal. Optionally, the offset value on the basis of the resource position occupied by the trigger signal may be a time domain offset value, also may be a frequency domain offset value, also may be a code domain offset value, also may be a spatial domain offset value, or in combination, and the present application is not limited thereto.

In some embodiments, the trigger signal carries the identification information and the resource indication information through one of following modulation schemes:
amplitude modulation, phase modulation and frequency modulation.

In other words, the network device may trigger the trigger signal to carry the identification information and the resource indication information through one of following modulation schemes:
amplitude modulation, phase modulation and frequency modulation.

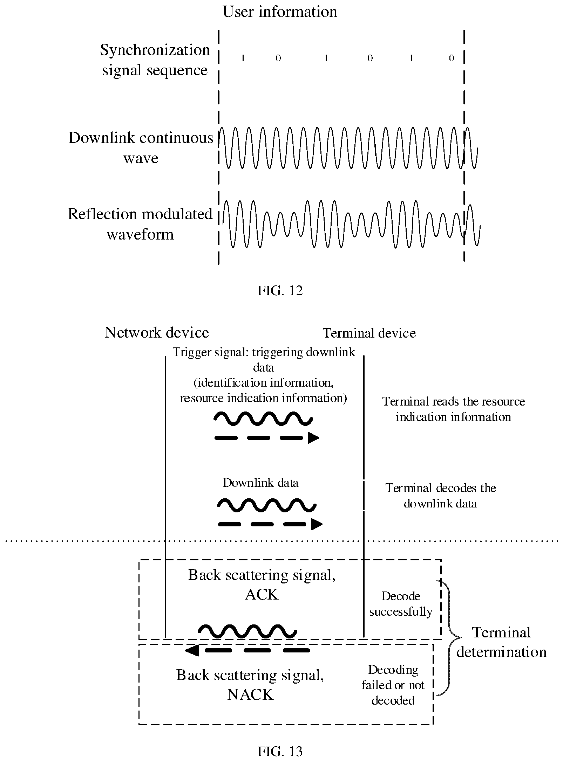

Specifically, for example, the amplitude modulation (using direct high-low level coding) may be as illustrated in FIG. 12.

In some embodiments, the trigger signal further carries at least one of following information corresponding to the data associated with the trigger signal:
a modulation order, a modulation scheme, an encoding rate, an encoding scheme or a number of data bits.

Specifically, for example, the encoding scheme may be a convolutional code, a Reed-muller code, or a Polar code. Specifically, the encoding scheme may also be implicitly obtained (for example, a difference between magnitude of load and the number of data bits) by other parameters (such as, the magnitude of load and the number of data bits).

Optionally, the trigger signal carries information corresponding to the data associated with the trigger signal through one of following modulation schemes:
amplitude modulation, phase modulation and frequency modulation.

Specifically, the terminal device may decode or encode data based on the information corresponding to the data associated with the trigger signal.

In some embodiments, in a case where the identification information indicates that the trigger signal is a signal directed at the terminal device, the terminal device determines the information of the resource occupied by the data associated with the trigger signal according to the resource indication information.

In some embodiments, in a case where the data associated with the trigger signal is downlink data, the terminal device receives (decodes and demodulates) the data associated with the trigger signal according to the information of the resource occupied by the data associated with the trigger signal.

In some embodiments, in the case where the data associated with the trigger signal is the downlink data, the resource indication information is further used for indicating information of a resource occupied by feedback information corresponding to the data associated with the trigger signal. Specifically, the terminal device determines the information of the resource occupied by the feedback information corresponding to the data associated with the trigger signal according to the resource indication information; and the terminal device transmits a first back scattering signal according to the information of the resource occupied by the feedback information corresponding to the data associated with the trigger signal, where the first back scattering signal carries the feedback information corresponding to the data associated with the trigger signal. Specifically, a response feedback manner of the terminal device is adopted to reflect whether the downlink data is correctly received, or to reflect the uplink data, thereby ensuring the reliable transmission of the uplink and downlink data.

In some embodiments, the first back scattering signal carries the feedback information corresponding to the data associated with the trigger signal through one of following modulation schemes:
amplitude modulation, phase modulation and frequency modulation.

Specifically, for example, in the case where the data associated with the trigger signal is the downlink data, that is, the trigger signal is used for triggering or instructing the terminal device to receive the downlink data, as illustrated in FIG. 13, the terminal device decodes the trigger signal, obtains the identification information and the resource indication information carried by the trigger signal, and in a case where it is determined that the trigger signal is a signal directed at the terminal device based on the identification information, the terminal device decodes the downlink data according to the resource indicated by the resource indication information. Optionally, in a case where the data is successfully decoded, the terminal device feeds back an acknowledgement (ACK) in a back scattering manner; or in a case where the data decoding is failed or is not decoded, the terminal device feeds back a negative acknowledgement (NACK) in a back scattering manner.

In some embodiments, in a case where the data associated with the trigger signal is uplink data or sidelink data, the terminal device transmits a second back scattering signal according to the information of the resource occupied by the data associated with the trigger signal, where the second back scattering signal carries the data associated with the trigger signal.

In some embodiments, modulation schemes adopted by the data associated with the trigger signal include one of following:
amplitude modulation, phase modulation and frequency modulation.

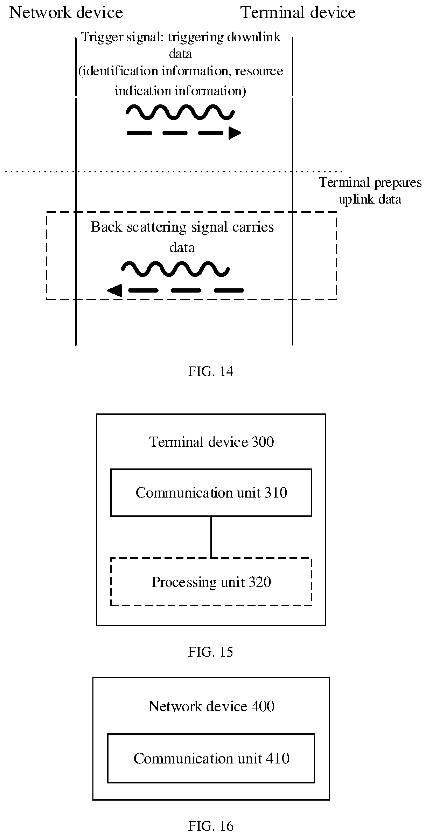

Specifically, for example, in the case where the data associated with the trigger signal is the uplink data, that is, the trigger signal is used for requesting or instructing the terminal device to transmit the uplink data, as illustrated in FIG. 14, the terminal device decodes the trigger signal, obtains the identification information and the resource indication information carried by the trigger signal, and in a case where it is determined that the trigger signal is a signal directed at the terminal device based on the identification information, the terminal device transmits the uplink data in the back scattering manner according to the resource indicated by the resource indication information. Optionally, in a case where the uplink data is successfully decoded, the network device feeds back an ACK; or in a case where the uplink data decoding is failed or is not decoded, the network device feeds back an NACK.

Therefore, in the embodiments of the present application, the trigger signal received by the terminal device carries the identification information and the resource indication information, the identification information is used for indicating whether the trigger signal is the signal directed at the terminal device, the resource indication information is used for indicating the information of the resource occupied by the data associated with the trigger signal. That is, the different terminal devices correspond to the different trigger signals, so that the different terminal devices can use resources indicated by resource indication information in the different trigger signals, thus realizing orderly and differentiated transmission of data of the large number of different zero power consumption terminals in the cell, and ensuring the reliable transmission of data.

The method embodiments of the present application are described in detail with reference to FIGS. 9 to 14 above, and apparatus embodiments of the present application will be described in detail with reference to FIGS. 15 to 19 below. It should be understood that the apparatus embodiments and the method embodiments correspond to each other, and similar descriptions may be made with reference to the method embodiments.

FIG. 15 illustrates a schematic block diagram of a terminal device 300 according to the embodiments of the present application. As illustrated in FIG. 15, the terminal device 300 includes:
a communication unit 310, configured to receive a trigger signal;
where the trigger signal carries identification information and resource indication information, the identification information is used for indicating whether the trigger signal is a signal directed at the terminal device, the resource indication information is used for indicating information of a resource occupied by data associated with the trigger signal, and the terminal device obtains power through power harvesting for communication, information collection and processing.

In some embodiments, the resource indication information at least includes an offset value relative to a reference resource position, or the resource indication information at least includes an offset value on a basis of a resource position occupied by the trigger signal.

In some embodiments, the identification information is a terminal inherent identifier, or the identification information is a terminal identifier registered in a network.

In some embodiments, a resource indicated by the resource indication information includes at least one of: a time domain resource, a frequency domain resource, a code domain resource or a spatial domain resource.

In some embodiments, the frequency domain resource occupies at least one carrier in a frequency domain, or the frequency domain resource occupies at least one subcarrier in the frequency domain.

In some embodiments, the data associated with the trigger signal includes at least one of: downlink data, uplink data or sidelink data.

In some embodiments, the trigger signal carries the identification information and the resource indication information through one of following modulation schemes:
amplitude modulation, phase modulation and frequency modulation.

In some embodiments, the trigger signal further carries at least one of following information corresponding to the data associated with the trigger signal:
a modulation order, a modulation scheme, an encoding rate, an encoding scheme or a number of data bits s.

In some embodiments, in a case where the identification information indicates that the trigger signal is a signal directed at the terminal device, the terminal device 300 further includes: a processing unit 320; and
the processing unit 320 is configured to determine the information of the resource occupied by the data associated with the trigger signal according to the resource indication information.

In some embodiments, the data associated with the trigger signal is downlink data, the terminal device 300 further includes: the processing unit 320; and
the processing unit 320 is configured to receive the data associated with the trigger signal according to the information of the resource occupied by the data associated with the trigger signal.

In some embodiments, the resource indication information is further used for indicating information of a resource occupied by feedback information corresponding to the data associated with the trigger signal, and the processing unit 320 is further configured to determine the information of the resource occupied by the feedback information corresponding to the data associated with the trigger signal according to the resource indication information; and
the processing unit 320 is further configured to transmit a first back scattering signal according to the information of the resource occupied by the feedback information corresponding to the data associated with the trigger signal, where the first back scattering signal carries the feedback information corresponding to the data associated with the trigger signal.

In some embodiments, the first back scattering signal carries the feedback information corresponding to the data associated with the trigger signal through one of following modulation schemes:
amplitude modulation, phase modulation and frequency modulation.

In some embodiments, the data associated with the trigger signal is uplink data or sidelink data, the terminal device 300 further includes: the processing unit 320; and
the processing unit 320 is further configured to transmit a second back scattering signal according to the information of the resource occupied by the data associated with the trigger signal, where the second back scattering signal carries the data associated with the trigger signal.

In some embodiments, modulation schemes adopted by the data associated with the trigger signal include one of following:
amplitude modulation, phase modulation and frequency modulation.

In some embodiments, the trigger signal is a power supply signal of the terminal device.

In some embodiments, the terminal device 300 further includes: the processing unit 320; and
the processing unit 320 is configured to obtain power through power supply signals continuously transmitted by a network device.

In some embodiments, the continuously transmitted power supply signals are constant amplitude continuous wave signals.

In some embodiments, the above communication unit may be a communication interface or a transceiver, or an input/output interface of a communication chip or a system-on-chip. The above processing unit may be one or more processors.

It should be understood that the terminal device 300 according to the embodiments of the present application may correspond to the terminal device in the method embodiments of the present application, and the above and other operations and/or functions of each unit of the terminal device 300 are intend to implement the corresponding processes of the terminal device in the method 200 illustrated in FIG. 9, respectively, which will not be repeated here for the sake of brevity.

FIG. 16 illustrates a schematic block diagram of a network device 400 according to the embodiments of the present application. As illustrated in FIG. 16, the network device 400 includes:
a communication unit 410, configured to transmit a trigger signal;
where the trigger signal carries identification information and resource indication information, the identification information is used for indicating whether the trigger signal is a signal directed at a terminal device, the resource indication information is used for indicating information of a resource occupied by data associated with the trigger signal, and the terminal device obtains power through power harvesting for communication, information collection and processing.

In some embodiments, the resource indication information at least includes an offset value relative to a reference resource position, or the resource indication information at least includes an offset value on a basis of a resource position occupied by the trigger signal.

In some embodiments, the identification information is a terminal inherent identifier, or the identification information is a terminal identifier registered in a network.

In some embodiments, a resource indicated by the resource indication information includes at least one of: a time domain resource, a frequency domain resource, a code domain resource or a spatial domain resource.

In some embodiments, the frequency domain resource occupies at least one carrier in a frequency domain, or the frequency domain resource occupies at least one subcarrier in the frequency domain.

In some embodiments, the data associated with the trigger signal includes at least one of: downlink data, uplink data or sidelink data.

In some embodiments, the trigger signal carries the identification information and the resource indication information through one of following modulation schemes:
amplitude modulation, phase modulation and frequency modulation.

In some embodiments, the trigger signal further carries at least one of following information corresponding to the data associated with the trigger signal:
a modulation order, a modulation scheme, an encoding rate, an encoding scheme or a number of data bits.

In some embodiments, in a case where the identification information indicates that the trigger signal is a signal directed at the terminal device, the resource indication information is used for the terminal device to determine the information of the resource occupied by the data associated with the trigger signal.

In some embodiments, the data associated with the trigger signal is downlink data, and the information of the resource occupied by the data associated with the trigger signal is used for the terminal device to receive the data associated with the trigger signal.

In some embodiments, the resource indication information is further used for indicating information of a resource occupied by feedback information corresponding to the data associated with the trigger signal, where the information of the resource occupied by the feedback information corresponding to the data associated with the trigger signal is used for the terminal device to transmit a first back scattering signal, and the first back scattering signal carries the feedback information corresponding to the data associated with the trigger signal.

In some embodiments, the first back scattering signal carries the feedback information corresponding to the data associated with the trigger signal through one of following modulation schemes:
amplitude modulation, phase modulation and frequency modulation.

In some embodiments, the data associated with the trigger signal is uplink data or sidelink data, where the information of the resource occupied by the data associated with the trigger signal is used for the terminal device to transmit a second back scattering signal, and the second back scattering signal carries the data associated with the trigger signal.

In some embodiments, modulation schemes adopted by the data associated with the trigger signal include one of following:
amplitude modulation, phase modulation and frequency modulation.

In some embodiments, the trigger signal is a power supply signal of the terminal device.

In some embodiments, the communication unit 410 is further configured to supply power to the terminal device through continuously transmitted power supply signals.

In some embodiments, the continuously transmitted power supply signals are constant amplitude continuous wave signals.

In some embodiments, the above communication unit may be a communication interface or a transceiver, or an input-output interface of a communication chip or a system-on-chip. The above processing unit may be one or more processors.

It should be understood that the network device 400 according to the embodiments of the present application may correspond to the network device in the method embodiments of the present application, and the above and other operations and/or functions of each unit of the network device 400 are intend to implement the corresponding processes of the network device in the method 200 illustrated in FIG. 9, respectively, which will not be repeated here for the sake of brevity.

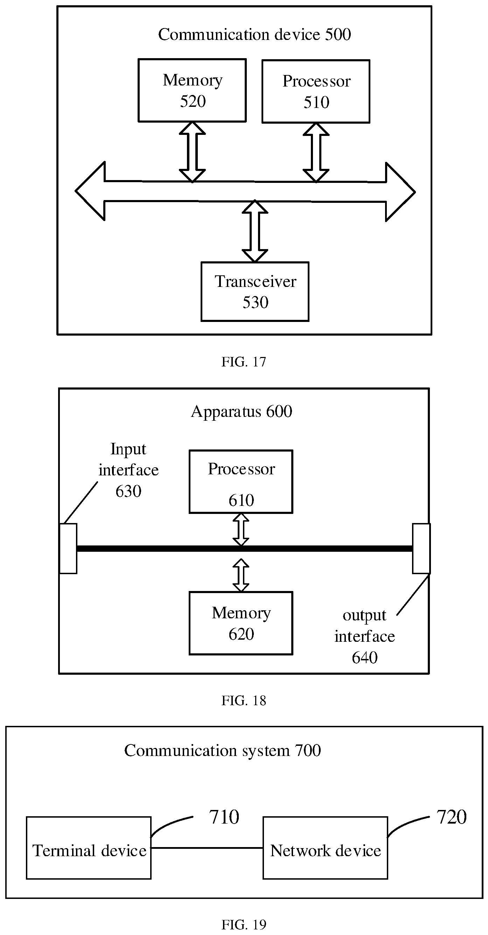

FIG. 17 is a schematic structural diagram of a communication device 500 provided by the embodiments of the present application. The communication device 500 illustrated in FIG. 17 includes a processor 510, and the processor 510 may call and run a computer program from a memory to implement the method in the embodiments of the present application.

In some embodiments, as illustrated in FIG. 17, the communication device 500 may also include a memory 520. Herein, the processor 510 may call and run a computer program from the memory 520 to implement the method in the embodiments of the present application.

The memory 520 may be a separate device independent from the processor 510, or may be integrated into the processor 510.

In some embodiments, as illustrated in FIG. 17, the communication device 500 may also include a transceiver 530, and the processor 510 may control the transceiver 530 to communicate with other devices, and specifically, to transmit information or data to other devices, or receive information or data transmitted by the other devices.

The transceiver 530 may include a transmitter and a receiver. The transceiver 530 may further include antenna(s). There may be one or more antennas.

In some embodiments, the communication device 500 may be the network device of the embodiments of the present application, and the communication device 500 may implement the corresponding processes implemented by the network device in various methods of the embodiments of the present application, which will not be repeated here for the sake of brevity.

In some embodiments, the communication device 500 may be the terminal device of the embodiments of the present application, and the communication device 500 may implement the corresponding processes implemented by the terminal device in various methods of the embodiments of the present application, which will not be repeated here for the sake of brevity.

FIG. 18 is a schematic structural diagram of an apparatus according to the embodiments of the present application. An apparatus 600 illustrated in FIG. 18 includes a processor 610, and the processor 610 may call and run a computer program from a memory to implement the method in the embodiments of the present application.

In some embodiments, as illustrated in FIG. 18, the apparatus 600 may also include a memory 620. Herein, the processor 610 may call and run a computer program from the memory 620 to implement the method in the embodiment of the present application.

The memory 620 may be a separate device independent from the processor 610 or may be integrated into the processor 610.

In some embodiments, the apparatus 600 may further include an input interface 630. The processor 610 may control the input interface 630 to communicate with other devices or chips, and specifically, to obtain information or data transmitted by other devices or chips.

In some embodiments, the apparatus 600 may further include an output interface 640. The processor 610 may control the output interface 640 to communicate with other devices or chip, and specifically, to output information or data to other devices or chips.

In some embodiments, the apparatus may be applied to the network device in the embodiments of the present application, and the apparatus may implement the corresponding processes implemented by the network device in various methods of the embodiments of the present application, which will not be repeated here for the sake of brevity.

In some embodiments, the apparatus may be applied to the terminal device in the embodiments of the present application, and the apparatus may implement the corresponding processes implemented by the terminal device in various methods of the embodiments of the present application, which will not be repeated here for the sake of brevity.

In some embodiments, the apparatus mentioned in the embodiments of the present application may also be a chip. For example, the chip may be a system-level chip, a system chip, a chip system or a system-on-chip, or the like.

FIG. 19 is a schematic block diagram of a communication system 700 provided by the embodiments of the present application. As illustrated in FIG. 19, the communication system 700 includes a terminal device 710 and a network device 720.

The terminal device 710 may be configured to implement the corresponding functions implemented by the terminal device in the above methods, or the network device 720 may be configured to implement the corresponding functions implemented by the network device in the above methods, which will not be repeated here for the sake of brevity.

It should be understood that the processor of the embodiments of the present application may be an integrated circuit chip with signal processing capability. In the implementation process, each step of the above method embodiments may be completed by the instructions in the form of integrated logic circuit of hardware or software in the processor. The above processors may be a general purpose processor, a digital signal processor (DSP), an application specific integrated circuit (ASIC), a field programmable gate array (FPGA), other programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor, or the like. The steps of the methods disclosed in connection with the embodiments of the present disclosure may be directly embodied in the execution completion of the hardware decoding processor, or by the combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present application may be a volatile memory or a non-volatile memory, or may include both the volatile memory and non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not a limitation for illustration, many forms of the RAM are available, such as, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct Rambus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present application may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present application is intended to include, but not limited to, these and any other suitable types of memories.

The embodiments of the present application further provide a computer readable storage medium for storing a computer program.

In some embodiments, the computer readable storage medium may be applied to the network device in the embodiments of the present application, and the computer program causes a computer to perform the corresponding processes implemented by the network device in various methods of the embodiments of the present application, which will not be repeated here for the sake of brevity.

In some embodiments, the computer readable storage medium may be applied to the terminal device in the embodiments of the present application, and the computer program causes a computer to perform the corresponding processes implemented by the terminal device in various methods of the embodiments of the present application, which will not be repeated here for the sake of brevity.

The embodiments of the present application further provide a computer program product, including computer program instructions.

In some embodiments, the computer program product may be applied to the network device in the embodiments of the present application, and the computer program instructions causes a computer to perform the corresponding processes implemented by the network device in various methods of the embodiments of the present application, which will not be repeated here for the sake of brevity.

In some embodiments, the computer program product may be applied to the terminal device in the embodiments of the present application, and the computer program instructions causes a computer to perform the corresponding processes implemented by the terminal device in various methods of the embodiments of the present application, which will not be repeated here for the sake of brevity.

The embodiments of the present application further provide a computer program.

In some embodiments, the computer program may be applied to the network device in the embodiment of the present application, and the computer program, when running on a computer, causes the computer to perform the corresponding processes implemented by the network device in various methods of the embodiments of the present application, which will not be repeated here for the sake of brevity.

In some embodiments, the computer program may be applied to the terminal device in the embodiment of the present application, and the computer program, when running on a computer, causes the computer to perform the corresponding processes implemented by the terminal device in various methods of the embodiments of the present application, which will not be repeated here for the sake of brevity.

Those of ordinary skill in the art will appreciate that the units and algorithm operations of each example described in connection with the embodiments disclosed herein may be implemented by electronic hardware, or by the combination of computer software and electronic hardware. Whether these functions are performed in hardware or software depends on the specific application and design constraints of the technical solutions. A professional technician may use different methods to implement the described functions for each specific application, but such implementation is not considered to be beyond the scope of the present application.

Those skilled in the art may clearly understand that for the convenience and brevity of the description, the specific working processes of the system, apparatus and unit described above may refer to the corresponding procedures in the embodiments of the method above, and will not be repeated herein.

In several embodiments provided by the present application, it should be understood that the disclosed system, apparatus and method may be implemented in other ways. For example, the embodiments of the apparatus described above are only schematic, for example, the division of the unit is only a logical functional division, and there may be another division way in the actual implementation, for example, multiple units or components may be combined or integrated into another system, or some features may be ignored or not implemented. On the other aspect, the mutual coupling or direct coupling or communication connection illustrated or discussed may be indirect coupling or communication connection through some interfaces, apparatus or units, and may be electrical, mechanical or other forms.

The units described as separation parts may or may not be physically separated, and the component displayed as a unit may be or may not be a physical unit, that is, it may be located at one place, or it may be distributed to multiple network units. Some or all of the units may be selected according to actual requirements to achieve the purpose of the schemes of the embodiments.

In addition, various functional units in each embodiment of the present application may be integrated into one processing unit, various units may exist physically alone, or two or more units may be integrated into one unit.

If the function is implemented in the form of a software functional unit and is sold or used as an independent product, it can be stored in a computer readable storage medium. Based on such an understanding, the technical solutions of the present application, in essence or the part that contributes to the prior art or the part of the technical solutions, may be embodied in the form of a software product, the computer software product is stored in a storage medium, includes multiple instructions for making a computer device (which may be a personal computer, a server, a network device, etc.) to perform all or part of the steps of the method according to each embodiment of the present application. The aforementioned storage media includes a media that may store a program code, such as a U disk, a mobile hard disk, a read-only memory (ROM), a random access memory (RAM), a disk or an optical disk.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A method of wireless communication, comprising:
receiving, by a terminal device, a trigger signal;
wherein the trigger signal carries identification information and resource indication information, the identification information is used for indicating whether the trigger signal is a signal directed at the terminal device, the resource indication information is used for indicating information of a resource occupied by data associated with the trigger signal, and the terminal device obtains power through power harvesting for communication, information collection and processing.

2. The method of claim 1, wherein
the resource indication information at least comprises an offset value relative to a reference resource position, or the resource indication information at least comprises an offset value on a basis of a resource position occupied by the trigger signal.

3. The method of claim 1 or 2, wherein
the identification information is a terminal inherent identifier, or the identification information is a terminal identifier registered in a network.

4. The method of any one of claims 1 to 3, wherein
a resource indicated by the resource indication information comprises at least one of: a time domain resource, a frequency domain resource, a code domain resource or a spatial domain resource.

5. The method of claim 4, wherein
the frequency domain resource occupies at least one carrier in a frequency domain, or the frequency domain resource occupies at least one subcarrier in the frequency domain.

6. The method of any one of claims 1 to 5, wherein
the data associated with the trigger signal comprises at least one of: downlink data, uplink data or sidelink data.

7. The method of any one of claims 1 to 6, wherein
the trigger signal carries the identification information and the resource indication information through one of following modulation schemes:
amplitude modulation, phase modulation and frequency modulation.

8. The method of any one of claims 1 to 7, wherein
the trigger signal further carries at least one of following information corresponding to the data associated with the trigger signal:
a modulation order, a modulation scheme, an encoding rate, an encoding scheme or a number of data bits.

9. The method of any one of claims 1 to 8, wherein in a case where the identification information indicates that the trigger signal is a signal directed at the terminal device, the method further comprises:
determining, by the terminal device, the information of the resource occupied by the data associated with the trigger signal according to the resource indication information.

10. The method of claim 9, wherein the data associated with the trigger signal is downlink data, and the method further comprises:
receiving, by the terminal device, the data associated with the trigger signal according to the information of the resource occupied by the data associated with the trigger signal.

11. The method of claim 10, wherein the resource indication information is further used for indicating information of a resource occupied by feedback information corresponding to the data associated with the trigger signal, and the method further comprises:
determining, by the terminal device, the information of the resource occupied by the feedback information corresponding to the data associated with the trigger signal according to the resource indication information; and
transmitting, by the terminal device, a first back scattering signal according to the information of the resource occupied by the feedback information corresponding to the data associated with the trigger signal, wherein the first back scattering signal carries the feedback information corresponding to the data associated with the trigger signal.

12. The method of claim 11, wherein
the first back scattering signal carries the feedback information corresponding to the data associated with the trigger signal through one of following modulation schemes:
amplitude modulation, phase modulation and frequency modulation.

13. The method of claim 9, wherein
the data associated with the trigger signal is uplink data or sidelink data, and the method further comprises:
transmitting, by the terminal device, a second back scattering signal according to the information of the resource occupied by the data associated with the trigger signal, wherein the second back scattering signal carries the data associated with the trigger signal.

14. The method of any one of claims 10 to 13, wherein
modulation schemes adopted by the data associated with the trigger signal comprise one of following:
amplitude modulation, phase modulation and frequency modulation.

15. The method of any one of claims 1 to 14, wherein
the trigger signal is a power supply signal of the terminal device.

16. The method of any one of claims 1 to 14, further comprising:
obtaining, by the terminal device, power through power supply signals continuously transmitted by a network device.

17. The method of claim 16, wherein the continuously transmitted power supply signals are constant amplitude continuous wave signals.

18. A method of wireless communication, comprising:
transmitting, by a network device, a trigger signal;
wherein the trigger signal carries identification information and resource indication information, the identification information is used for indicating whether the trigger signal is a signal directed at a terminal device, the resource indication information is used for indicating information of a resource occupied by data associated with the trigger signal, and the terminal device obtains power through power harvesting for communication, information collection and processing.

19. The method of claim 18, wherein
the resource indication information at least comprises an offset value relative to a reference resource position, or the resource indication information at least comprises an offset value on a basis of a resource position occupied by the trigger signal.

20. The method of claim 18 or 19, wherein
the identification information is a terminal inherent identifier, or the identification information is a terminal identifier registered in a network.

21. The method of any one of claims 18 to 20, wherein
a resource indicated by the resource indication information comprises at least one of: a time domain resource, a frequency domain resource, a code domain resource or a spatial domain resource.

22. The method of claim 21, wherein
the frequency domain resource occupies at least one carrier in a frequency domain, or the frequency domain resource occupies at least one subcarrier in the frequency domain.

23. The method of any one of claims 18 to 22, wherein
the data associated with the trigger signal comprises at least one of: downlink data, uplink data or sidelink data.

24. The method of any one of claims 18 to 23, wherein
the trigger signal carries the identification information and the resource indication information through one of following modulation schemes:
amplitude modulation, phase modulation and frequency modulation.

25. The method of any one of claims 18 to 24, wherein
the trigger signal further carries at least one of following information corresponding to the data associated with the trigger signal:
a modulation order, a modulation scheme, an encoding rate, an encoding scheme or a number of data bits.

26. The method of any one of claims 18 to 25, wherein in a case where the identification information indicates that the trigger signal is a signal directed at the terminal device, the resource indication information is used for the terminal device to determine the information of the resource occupied by the data associated with the trigger signal.

27. The method of claim 26, wherein
the data associated with the trigger signal is downlink data, and the information of the resource occupied by the data associated with the trigger signal is used for the terminal device to receive the data associated with the trigger signal.

28. The method of claim 27, wherein the resource indication information is further used for indicating information of a resource occupied by feedback information corresponding to the data associated with the trigger signal, wherein the information of the resource occupied by the feedback information corresponding to the data associated with the trigger signal is used for the terminal device to transmit a first back scattering signal, and the first back scattering signal carries the feedback information corresponding to the data associated with the trigger signal.

29. The method of claim 28, wherein
the first back scattering signal carries the feedback information corresponding to the data associated with the trigger signal through one of following modulation schemes:
amplitude modulation, phase modulation and frequency modulation.

30. The method of claim 26, wherein the data associated with the trigger signal is uplink data or sidelink data, wherein the information of the resource occupied by the data associated with the trigger signal is used for the terminal device to transmit a second back scattering signal, and the second back scattering signal carries the data associated with the trigger signal.

31. The method of any one of claims 27 to 30, wherein
modulation schemes adopted by the data associated with the trigger signal comprise one of following:
amplitude modulation, phase modulation and frequency modulation.

32. The method of any one of claims 18 to 31, wherein
the trigger signal is a power supply signal of the terminal device.

33. The method of any one of claims 18 to 31, further comprising:
supplying, by the network device, power to the terminal device through continuously transmitted power supply signals.

34. The method of claim 33, wherein the continuously transmitted power supply signals are constant amplitude continuous wave signals.

35. A terminal device, comprising:
a communication unit, configured to receive a trigger signal;
wherein the trigger signal carries identification information and resource indication information, the identification information is used for indicating whether the trigger signal is a signal directed at the terminal device, the resource indication information is used for indicating information of a resource occupied by data associated with the trigger signal, and the terminal device obtains power through power harvesting for communication, information collection and processing.

36. A network device, comprising:
a communication unit, configured to transmit a trigger signal;
wherein the trigger signal carries identification information and resource indication information, the identification information is used for indicating whether the trigger signal is a signal directed at a terminal device, the resource indication information is used for indicating information of a resource occupied by data associated with the trigger signal, and the terminal device obtains power through power harvesting for communication, information collection and processing.

37. A terminal device, comprising: a processor and a memory, wherein the memory is configured to store a computer program, and the processer is configured to call and run the computer program stored in the memory, to cause the terminal device to perform the method of any one of claims 1 to 17.

38. A network device, comprising: a processor and a memory, wherein the memory is configured to store a computer program, and the processer is configured to call and run the computer program stored in the memory, to cause the network device to perform the method of any one of claims 18 to 34.

39. A chip, comprising: a processor, wherein the processer is configured to call and run a computer program from a memory, to cause a device equipped with the chip to perform the method of any one of claims 1 to 17.

40. A chip, comprising: a processor, wherein the processer is configured to call and run a computer program from a memory, to cause a device equipped with the chip to perform the method of any one of claims 18 to 34.

41. A computer readable storage medium, configured to store a computer program, wherein the computer program causes a computer to perform the method of any one of claims 1 to 17.

42. A computer readable storage medium, configured to store a computer program, wherein the computer program causes a computer to perform the method of any one of claims 18 to 34.

43. A computer program product, comprising: computer program instructions, wherein the computer program instructions cause a computer to perform the method of any one of claims 1 to 17.

44. A computer program product, comprising: computer program instructions, wherein the computer program instructions cause a computer to perform the method of any one of claims 18 to 34.

45. A computer program, wherein the computer program causes a computer to perform the method of any one of claims 1 to 17.

46. A computer program, wherein the computer program causes a computer to perform the method of any one of claims 18 to 34.
